# EUROPÄISCHE PATENTSCHRIFT

(11) **EP 1 070 634 B1**
(45) Veröffentlichungstag und Bekanntmachung des Hinweises auf die Patenterteilung: **15.03.2006**
(21) Anmeldenummer: 00115488.9
(22) Anmeldetag: 18.07.2000
(51) Int. Cl.: B60Q 1/26

(54) **Seitenblinkleuchte**
Direction indicating side light
Feu latéral indicateur de direction

(30) Priorität: 19.07.1999 DE 19933724
(43) Veröffentlichungstag der Anmeldung: 24.01.2001
(73) Patentinhaber: FER Fahrzeugelektrik GmbH, 99819 Eisenach (DE)
(72) Erfinder: Bräutigam, Markus, 36433 Immelborn (DE); Künstler, Rolf, 99817 Eisenach (DE)
(74) Vertreter: Strasser, Wolfgang

(56) Entgegenhaltungen:
- EP-A- 0 404 135
- EP-A- 0 669 223
- DE-A- 19 646 042
- DE-U- 29 804 489
- DE-U- 29 819 279
- FR-A- 2 693 415
- US-A- 5 081 564
- PATENT ABSTRACTS OF JAPAN vol. 1997, no. 08, 29. August 1997 (1997-08-29) & JP 09 095177 A (YAMASA NOUSAN KK), 8. April 1997 (1997-04-08)

## Beschreibung

Die Erfindung betrifft eine Seitenblinkleuchte für den Einbau in die Abdeckkappe eines Aussenrückspiegels für Kraftfahrzeuge.

Eine solche Seitenblinkleuchte ist beispielsweise aus der US-Patentschrift 5,774,283 bekannt. Diese bekannte Seitenblinkleuchte umfasst ein Leuchtengehäuse mit einer Lichtaustrittsöffnung, die durch eine lichtdurchlässige Lichtscheibe verschlossen ist. Der Einbauort der Seitenblinkleuchte in die Abdeckkappe befindet sich an dem vom Kraftfahrzeug entfernt liegenden, nach aussen weisenden Ende der Abdeckkappe, wobei der die von einer Glühlampe gebildete Lichtquelle umgebende Reflektor so angeordnet ist, dass die Hauptabstrahlrichtung bezüglich der Fahrtrichtung schräg nach vorne verläuft. Die Lichtscheibe ist so geformt, dass sie die Aussenkontur der Abdeckkappe kontinuierlich fortsetzt, wobei sie in der auf die Einbaulage bezogenen Draufsicht so gekrümmt ist, dass sie einen Winkel von etwa 90° überspannt, d. h. mit ihrem äussersten Endbereich in etwa quer zur Fahrtrichtung weist. Dadurch soll erreicht werden, dass das im eingeschalteten Zustand von der Lichtquelle ausgesandte Licht auch für Personen erkennbar ist, die sich seitlich vom Kraftfahrzeug befinden. Um diesen Effekt noch zu verstärken, ist der erwähnte Reflektor auf der näher am Fahrzeug liegenden Seite in Draufsicht länger ausgebildet und weiter nach vorne gezogen, so dass er das von der Lichtquelle in Richtung zum Fahrzeug hin abgegebene Licht sammelt und in die entgegengesetzte Seitenrichtung gebündelt reflektiert.

Nachteilig an dieser bekannten Anordnung ist, dass eine Abstrahlung des von der Lichtquelle erzeugten Lichtes nach hinten, das heißt entgegen der Hauptabstrahlrichtung bzw. der Fahrtrichtung nicht möglich ist, so dass diese Seitenblinkleuchte von Personen, die sich schräg oder genau hinter einem mit einer solchen Seitenblinkleuchte ausgerüsteten Fahrzeug befinden, nicht erkannt werden kann.

Zur Lösung dieses Problems sieht die Druckschrift DE 298 19 279 U1 zusätzlich zu der oder den Lichtquellen der Seitenblinkleuchte, welche ihr Licht in Fahrtrichtung abstrahlen, eine weitere Lichtquelle mit einem eigenen Reflektor vor, deren Licht bezüglich der Fahrtrichtung im wesentlichen schräg nach hinten abgestrahlt wird. Zu diesem Zweck ist der Reflektor der weiteren Lichtquelle als ein zwei Brennpunkte aufweisender Ellipsolid-Retlektor ausgebildet, in dessen einem Brennpunkt die weitere Lichtquelle angeordnet ist, während der zweite Brennpunkt im wesentlichen ausserhalb des Umrisses des Spiegelkopfes liegt. Durch diese konstruktive Ausgestaltung wird erreicht, dass die von der weiteren Lichtquelle ausgesandten und an ihrem Reflektor reflektierten Strahlen einander im zweiten Brennpunkt schneiden, d. h. nach Durchlaufen dieses zweiten Brennpunktes so divergieren, dass sie einen Strahlungswinkel α von mindestens 60° ausleuchten.

Eine solche Anordnung ist vergleichsweise kompliziert herzustellen und zusammenzubauen, da bei einem Ellipsoid-Reflektor bereits geringe Toleranzschwankungen zu beträchtlichen axialen Verschiebungen der beiden Brennpunkte führen können. Darüber hinaus führt das Merkmal, dass der zweite Brennpunkt ausserhalb des Umrisses des Spiegelkopfes liegen soll, zu Einschränkungen bei der Formgebung des Spiegelkopfgehäuses, deren Einhaltung in vielen Fällen nicht möglich oder erwünscht ist.

Demgegenüber liegt der Erfindung die Aufgabe zugrunde, die Umlenkung des von der weiteren Lichtquelle abgegebenen Lichts schräg nach hinten mit wesentlich einfacheren Mitteln zu erzielen, deren Verwendung nicht zu den eben erwähnten Schwierigkeiten führt.

Zur Lösung dieser Aufgabe sieht die Erfindung die im Anspruch 1 zusammengefassten Merkmale vor.

Erfindungsgemäß wird der Reflektor der weiteren Lichtquelle so ausgebildet, dass er ihr Licht im wesentlichen in seitlicher Richtung so bündelt, dass ein gewisser Teil dieses Lichts mit einer nach hinten gerichteten Komponente abgestrahlt wird. Um die Umlenkung nach hinten noch zu steigern, ist weiterhin vorgesehen, im Strahlengang dieses Reflektors ein Lichtlenkungselement, vorzugsweise ein Prisma so anzuordnen, dass es den größten Teil des vom Reflektor gebündelten Lichts so umlenkt, dass es in Ebenen, die im eingebauten Zustand in etwa horizontal liegen, im wesentlichen eine einzige, bezüglich der Hauptabstrahlrichtung schräg nach hinten verlaufende Abstrahlrichtung erhält.

Durch diese Kombination von Maßnahmen wird eine ausgezeichnete Sichtbarkeit der erfindungsgemäßen Seitenblinkleuchte nicht nur von vorne und der Seite sondern auch aus einem großen hinter dem betreffenden Kraftfahrzeug liegenden Winkelbereich erzielt.

Vorteilhafte Weiterbildungen und Ausgestaltungen der erfindungsgemäßen Seitenblinkleuchte sind in den Unteransprüchen niedergelegt.

Die Erfindung wird im folgenden anhand von Ausführungsbeispielen unter Bezugnahme auf die Zeichnung beschrieben; in dieser zeigen:
- Fig. 1: eine Schnitt-Draufsicht auf eine in die Abdeckkappe eines Außenrückspiegels eingebaute Seitenblinkleuchte gemäß der Erfindung,
- Fig. 2: in vergrößertem Maßstab ein Detail aus Fig. 1,
- Fig. 3: einen vertikalen Schnitt durch eine in die Abdeckkappe eines Außenrückspiegels eingebaute Seitenblinkleuchte gemäß der Erfindung,
- Fig. 4: eine perspektivische Darstellung der Befestigung einer der Lampen auf dem Lampenträger gemäß der vorliegenden Erfindung.

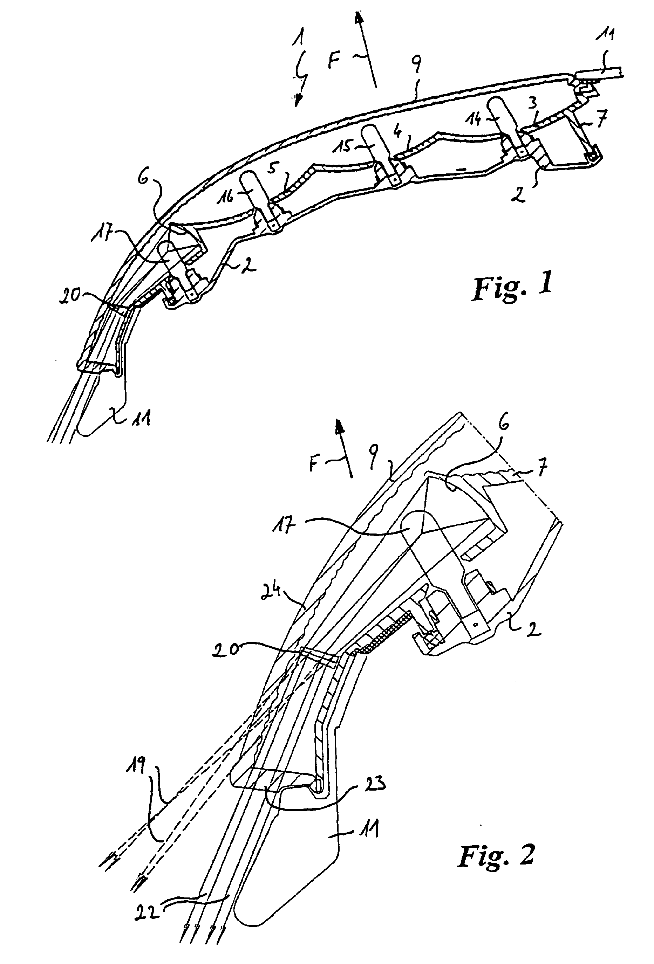

In den Fig. 1 und 2 ist ein im eingebauten Zustand horizontaler Schnitt durch eine Seitenblinkleuchte 1 gemäß der Erfindung dargestellt, die ein Leuchtengehäuse umfaßt, daß von einem Lampenträger 2 und einer aus mehreren Reflektoren 3, 4, 5, 6 bestehenden Reflektoranordnung 7 gebildet wird und dessen Lichtaustrittsöffnung von einer Lichtscheibe 9 verschlossen ist.

Wie man sieht, ist die in der Schnittebene gekrümmte Lichtscheibe 9 in die Abdeckkappe 11 eines Kfz-Außenrückspiegels derart eingebaut, daß sie sich von der in den Fig. 1 und 2 links befindlichen Seitenrichtung des Fahrzeugs mit einem kontinuierlichen Übergang in die Vorderseite der Abdeckkappe 11 hinein erstreckt, die in etwa in die in den Fig. 1 und 2 oben befindüche Fahrtrichtung des Kraftfahrzeuges weist.

Bei der gezeigten Ausführungsform sind am Lampenträger 2 insgesamt vier von Glühlampen gebildete Lichtquellen 14, 15, 16, 17 montiert, von denen jede von einem der Reflektoren 3, 4, 5, 6 so umgeben ist, daß ihr Licht in die gewünschte Abstrahlrichtung gebündelt wird. Für die drei in Fig. 1 rechten Lichtquellen 14, 15, 16 ist dies die im wesentlichen in Fahrtrichtung des Kraftfahrzeuges weisende Hauptabstrahlrichtung, die durch den Pfeil F gekennzeichnet ist.

Demgegenüber ist der der vierten, ganz außen angeordneten weiteren Lichtquelle 17 zugeordnete Reflektor 6 so ausgebildet, daß er ihr Licht im wesentlichen quer zur Hauptabstrahlrichtung zur Außenseite hin bündelt.

Die gestrichelten Pfeile 19 in Fig. 2 zeigen, wie das von diesem weiteren Reflektor 6 gebündelte Licht der weiteren Lichtquelle 17 ohne zusätzliche Maßnahmen aus der Lichtscheibe austreten würde. Man sieht, daß diese Austrittsrichtung zwar auch eine nach hinten, d.h. entgegen der Fahrtrichtung weisende Komponente besitzt, im wesentlichen aber doch quer zur Hauptabstrahlrichtung der Seitenblinkleuchte gerichtet ist.

Um eine noch mehr nach hinten gerichtete Abstrahlung zu erzielen, ist daher ein Lichtlenkungselement 20 vorgesehen, das im vorliegenden Beispiel als stäbchenförmiges Prisma ausgebildet ist. Wie die in durchgezogenen Linien gezeichneten Pfeile 22 zeigen, wird durch dieses Lichtlenkungselement 20 das von der Lichtquelle 17 abgegebene Licht in verstärktem Maße nach hinten umgelenkt, so daß es im wesentlichen entgegen der Hauptabstrahlrichtung F aus der Lichtscheibe 9 austritt, die zu diesem Zweck an ihrem in den Fig. 1 und 2 linken Ende eine schräg nach hinten weisende Lichtaustrittsfläche 23 aufweist, die zur Haupt-Lichtaustrittsfläche 24 der Lichtscheibe 9 in etwa unter einem rechten Winkel verläuft.

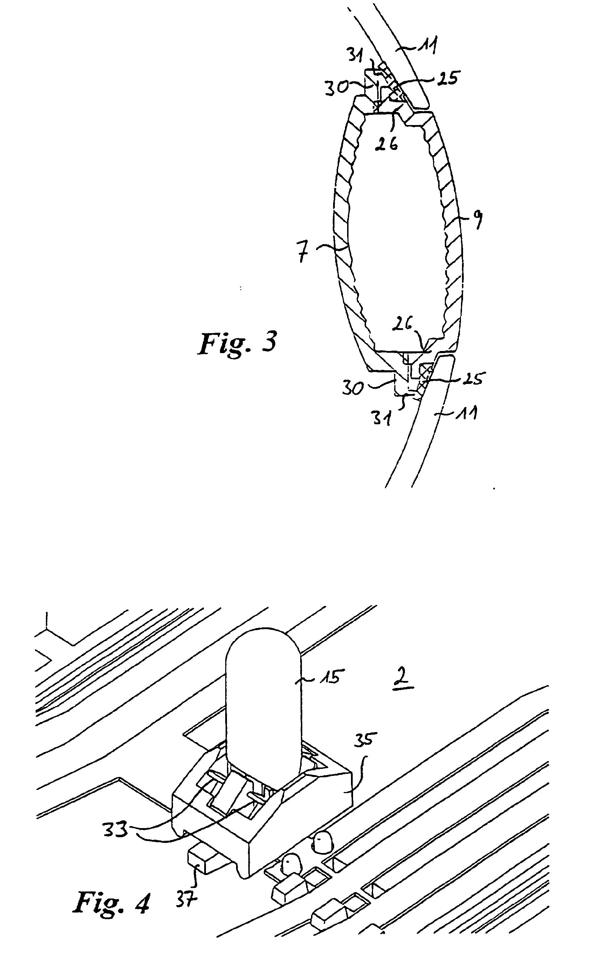

Im Vertikalschnitt der Fig. 3 sind nur die Abdeckkappe 11 des Außenrückspiegels, die Lichtscheibe 9, ein Teil der Reflektoranordnung 7 und eine Dichtung 25 dargestellt. Wie man sieht, ragt der Hauptteil der Lichtscheibe 9, der die entsprechende Öffnung der Abdeckkappe 11 ausfüllt, gegenüber einem gestuft rückspringenden Randbereich 26 vor, der im eingebauten Zustand eine das gesamte Leuchtengehäuse umgebende Dichtung 25 von innen an die Abdeckkappe 11 andrückt. Die Reflektoranordnung 7 weist einen noch über den Randbereich 26 der Lichtscheibe nach außen vorstehenden Umfangsrand 30 mit einem Vorsprung 31 auf, der so ausgebildet ist, daß er die Dichtung 25 zusätzlich längs einer Umfangslinie gegen die Innenseite der Abdeckkappe 11 andrückt, die bezüglich der durch den Randbereich 26 der Lichtscheibe erzeugten Andrückzone weiter außen liegt. Durch dieses zweifache Andrücken der Dichtung 25 wird in vorteilhafter Weise ein völlig dichter Verschluß der Öffnung der Abdeckkappe 11 erzielt.

In Fig. 4 ist eine gemäß der Erfindung bevorzugte Befestigung der Lampen auf dem Lampenträger 2 dargestellt. Dabei ist willkürlich die Lampe 15 herausgegriffen, doch versteht sich von selbst, daß auch die anderen Lampen 14, 16 und 17 in vergleichbarer Weise auf dem Lampenträger 2 montiert sind. Wie man sieht, ist die Lampe 15 nicht nur einfach zwischen die Kontakte 33 des Lampenträgers 2 gesteckt. Um einen sicheren Halt und eine exakte Ausrichtung der Lampe 15 zu erzielen, ist vielmehr ein rahmenartiges Fixierungselement 35 vorgesehen, daß auf eine Rippe 37 des Lampenträgers 2 so aufgesteckt ist, daß es den Fuß der Lampe 15 von allen Seiten umgibt und diese in einer eindeutigen Lage so fixiert, daß eine ordnungsgemäße Ausrichtung auch über lange Zeiträume hinweg und bei starken Erschütterungen gewährleistet ist.

Sind mehrere, beispielsweise drei Lampen vertikal übereinander angeordnet, wie dies vorzugsweise bei der weiteren Lichtquelle 17 der Fall ist, so können diese auch durch ein gemeinsames Fixierungselement zusätzlich gehalten werden.

## Patentansprüche

1. Seitenblinkleuchte (1) für den Einbau in die Abdeckkappe (11) eines Außenrückspiegels für Kraftfahrzeuge mit
- einem Leuchtengehäuse mit einer Lichtaustrittsöffnung,
- einer die Lichtaustrittsöffnung des Leuchtengehäuses verschließenden lichtdurchlässigen Lichtscheibe (9), die derart gekrümmt ist, dass sie sich im eingebauten Zustand von der vom Fahrzeug entfernt liegenden Außenseite der Abdeckkappe (11) ausgehend mit einem kontinuierlichen Übergang in die in etwa in Fahrtrichtung weisende Vorderseite der Abdeckkappe (11) hinein erstreckt,
- wenigstens einer im Leuchtengehäuse fest montierten Lichtquelle (14, 15, 16)
- wenigstens einem Reflektor (3, 4, 5), der das Licht der wenigstens einen Lichtquelle (14, 15, 16) in eine im eingebauten Zustand im wesentlichen in Fahrtrichtung weisende Hauptabstrahlrichtung (F) bündelt,
- wenigstens einer weiteren Lichtquelle (17) mit jeweils einem weiteren Reflektor (6), der das Licht der weiteren Lichtquelle (17) im wesentlichen quer zur Hauptabstrahlrichtung (F) zur Außenseite hin reflektiert und bündelt, **gekennzeichnet durch**
- ein Lichtlenkungselement (20) im Strahlengang des weiteren Reflektors (6), das den größten Teil des von diesem gebündelten Lichts so umlenkt, dass es in Ebenen, die im eingebauten Zustand in etwa horizontal liegen, im wesentlichen eine einzige, bezüglich der Hauptabstrahlrichtung (F) schräg nach hinten verlaufende Abstrahlrichtung erhält.

2. Seitenblinkleuchte nach Anspruch 1, **dadurch gekennzeichnet, dass** das Lichtlenkungselement (20) ein Prisma ist.

3. Seitenblinkleuchte nach Anspruch 1 oder 2, **dadurch gekennzeichnet, dass** die Reflektoren (3, 4, 5, 6) das Licht der zugehörigen Lichtquelle (14, 15, 16, 17) jeweils in einen die Horizontalebene umschließenden Öffnungswinkel bündeln, der in vertikaler Richtung enger ist als der Öffnungswinkel des vo der zugehörigen Lichtquelle (14, 15, 16, 17) unmittelbar abgestrahlten Lichts.

4. Seitenblinkleuchte nach Anspruch 2 und 3, **dadurch gekennzeichnet, dass** das Lichtlenkungselement (20) die Form eines sich im wesentlichen in vertikaler Richtung erstreckenden prismatischen Stäbchens mit dreieckigem Querschnitt besitzt.

5. Seitenblinkleuchte nach einem der vorhergehenden Ansprüche, **dadurch gekennzeichnet, dass** die Lichtscheibe (9) eine im eingebauten Zustand bezüglich der Hauptabstrahlrichtung (F) schräg nach hinten weisende Lichtaustrittsfläche (23) aufweist.

6. Seitenblinkleuchte nach einem der vorhergehenden Ansprüche, **dadurch gekennzeichnet, dass** der wenigstens eine, das Licht der wenigstens einen Lichtquelle (14, 15, 16) in der Hauptabstrahlrichtung (F) bündelnde Reflektor (3, 4, 5) und der weitere Reflektor (6) eine einstückige Reflektoranordnung (7) bilden.

7. Seitenblinkleuchte nach einem der vorhergehenden Ansprüche, **dadurch gekennzeichnet, dass** sie so von innen her in eine Öffnung der Abdeckkappe (11) des Außenrückspiegels einsetzbar ist, dass der vorragende Hauptteil der Lichtscheibe (9) diese Öffnung im wesentlichen ausfüllt, während ein diesen Hauptteil umgebender, rückspringender Randbereich (26) von innen gegen die die Öffnung umgebenden Innenwand der Abdeckkappe (11) unter Zwischenfügung einer Dichtung (25) angedrückt wird.

8. Seitenblinkleuchte nach Anspruch 7, **dadurch gekennzeichnet, dass** die Reflektoranordnung (7) an ihrem Umfangsrand (30) einen im wesentlichen über den gesamten Umfang verlaufenden Vorsprung (31) aufweist, der die zwischen der Lichtscheibe (9) und der Innenwand der Abdeckkappe (11) angeordnete Dichtung (25) zusätzlich gegen die Innenwand der Abdeckkappe (11) drückt.

9. Seitenblinkleuchte nach einem der vorhergehenden Ansprüche, **dadurch gekennzeichnet, dass** der Fuß wenigstens einer der Lichtquellen (14, 15, 16, 17) von einem rahmenförmigen Fixierungselement (35) umgeben ist, das einerseits mit dem Lampenträger (2) und andererseits mit dem Fuß der Lichtquelle (14, 15, 16, 17) so in Eingriff steht, dass die Lichtquelle (14, 15, 16, 17) eine exakte Ausrichtung erhält.

10. Seitenblinkleuchte nach einem der vorhergehenden Ansprüche, **dadurch gekennzeichnet, dass** die weitere Lichtquelle mehrere Lampen umfasst, die im eingebauten Zustand in etwa vertikal übereinander angeordnet sind und von denen jede einen eigenen weiteren Reflektor aufweist.

11. Seitenblinkleuchte nach Anspruch 10, **dadurch gekennzeichnet, dass** der größte Teil des von den weiteren Reflektoren gebündelten Lichts von einem gemeinsamen Lichtlenkungselement so umgelenkt wird, dass es in Ebenen, die im eingebauten Zustand in etwa horizontal liegen, im wesentlichen eine einzige, bezüglich der Hauptabstrahlrichtung (F) schräg nach hinten verlaufende Abstrahlrichtung erhält.

## Claims

1. A side flashing lamp (1) for fitting in the cover cap (10) of an external rear view mirror for a motor vehicle, comprising
a lamp housing having a light exit opening,
a translucent cover (9) which closes the light exit opening of the lamp housing and which is curved in such a way that in the installed condition it extends from the outward side of the cover cap (11), which is remote from the vehicle, with a continuous transition into the front side of the cover cap (11), which faces at least approximately in the direction of forward travel of the vehicle,
at least one light source (14, 15, 16) mounted in the lamp housing at a fixed position therein,
at least one reflector (3, 4, 5) operable to focus the light of the at least one light source (14, 15, 16) into a main radiation direction (F) which faces substantially in said direction of forward travel,
at least one further light source (17) with at least one further respective reflector (6) operable to reflecting and to focus the light of the further light source (17) substantially transversely outwardly with respect to said main radiation direction (F),
**characterised by**
a light deflection means (20) disposed in the beam path of the further reflector (6) and operable to deflect the major part of the light focused by said further reflector (6) in such a way that, in planes which in the installed condition extend about horizontally, it has one single radiation direction which extends obliquely rearwardly with respect to the main radiation direction (F).

2. A side flashing lamp as set forth in claim 1, **characterised in that** the light deflection means (20) is a prism.

3. A side flashing lamp as set forth in claim 1, **characterised in that** the reflectors (3, 4, 5, 6) are operable to focus the light of the operatively associated light source (14, 15, 16, 17) in a aperture angle including a horizontal plane and being more narrow in a vertical direction than the light which is directly emitted by the corresponding light source (14, 15, 16, 17).

4. A side flashing lamp as set forth in claim 2, **characterised in that** the light deflection (20) means is in the form of a prismatic rod of triangular cross-section, said rod extending substantially in a vertical direction.

5. A side flashing lamp as set forth in claim 1, **characterised in that** the translucent cover (9) has a light exit surface (23) which extends obliquely rearwardly in the installed condition with respect to the main radiation direction (F).

6. A side flashing lamp as set forth in claim 1, **characterised in that** the at least one reflector (3, 4, 5) which focuses the light of the at least one light source (14, 15, 16) in the main radiation direction (F) and the further reflector (6) form an integral reflector assembly (7).

7. A side flashing lamp as set forth in any preceding claim, **characterised in that** it is insertable from the interior into an opening in the cover cap (11) of the external rear view mirror in such a way that the protruding main part of said translucent cover (9) at least substantially fills said opening while a set-back edge region (26) surrounding said main part is pressed from the inside against the inside wall of the cover cap (11) which surrounds the opening, a seal (25) being interposed between said inside wall and said translucent cover.

8. A side flashing lamp as set forth in claim 7, **characterised in that** the reflector assembly (7) has a peripheral edge portion (30) and at said peripheral edge portion a projection (31) which extends substantially over the entire periphery and which additionally presses said seal (25), which is arranged between said translucent cover (9) and the inside wall of said cover cap (11), against the inside wall of the cover cap (11).

9. A side flashing lamp as set forth in any preceding claim **characterised in that** the base of said at least one light source (14, 15, 16, 17) is surrounded by a frame like fixing element (35) being engaged with a lamp carrier (2) on the one hand and with the base of the light source (14, 15, 16, 17) on the other hand, in such a way that the light source (14, 15, 16, 17) is in an accurately oriented position.

10. A side flashing lamp as set forth in any preceding claim, **characterised in that** the further light source includes a plurality of lamps which are arranged substantially vertically one above the other in the installed condition and each of which has its own said further reflector.

11. A side flashing lamp as set forth in claim 10, **characterised in that** the major part of the light focused by the further reflectors is so diverted by a common light deflection element that, in planes which in the installed condition extend about horizontally, it has one single radiation direction which extends obliquely rearwardly with respect to the main radiation direction (F).

## Revendications

1. Clignotant latéral indicateur de direction (1) pour le montage dans la coque de recouvrement (11) d'un rétroviseur pour un véhicule automobile comprenant :
- un boîtier de lampe pourvu d'une ouverture de sortie de lumière,
- une fenêtre de lumière (9) laissant passer la lumière et obturant l'ouverture de sortie de lumière du boîtier de lampe, la fenêtre de lumière (9) étant courbée de telle sorte qu'elle s'étend à l'état monté à partir du côté extérieur de la coque de recouvrement (11) située en éloignement du véhicule avec une transition continue dans le côté avant de la coque de recouvrement (11) qui est dirigée sensiblement dans la direction de conduite,
- au moins une source de lumière (14, 15, 16) montée fixement dans le boîtier de lampe,
- au moins un réflecteur (3, 4, 5) qui concentre la lumière de ladite au moins une source de lumière (14, 15, 16) dans une direction de réflexion principale (F) qui est orienté à l'état monté sensiblement dans la direction de conduite,
- au moins une autre source de lumière (17) pourvue respectivement d'un autre réflecteur (6), qui réfléchit et concentre la lumière de l'autre source de lumière (17) sensiblement transversalement à la direction de réflexion principale (F) vers le côté externe, **caractérisé par**
- un élément de renvoi de lumière (20) dans la marche des rayons de l'autre réflecteur (6), qui dévie la majeure partie de la lumière concentrée par ce réflecteur de telle sorte qu'elle présente, dans le plan, qui se situe sensiblement horizontalement à l'état monté, essentiellement une seule direction de réflexion qui s'étend, par rapport à la direction de réflexion principale (F), de manière inclinée vers l'arrière.

2. Clignotant selon la revendication 1, **caractérisé en ce que** l'élément de renvoi de lumière (20) est un prisme.

3. Clignotant selon la revendication 1 ou 2, **caractérisé en ce que** les réflecteurs (3, 4, 5, 6) concentrent la lumière de la source de lumière correspondante (14, 15, 16, 17) respectivement dans un angle d'ouverture entourant le plan horizontal, cet angle d'ouverture dans la direction verticale étant plus faible que l'angle d'ouverture de la lumière réfléchie directement par la source de lumière correspondante (14, 15, 16, 17).

4. Clignotant selon les revendications 2 et 3, **caractérisé en ce que** l'élément de renvoi de lumière (20) présente la forme d'une barrette prismatique avec une section triangulaire s'étendant sensiblement en direction verticale.

5. Clignotant selon l'une des revendications précédentes, **caractérisé en ce que** la fenêtre de lumière (9) présente une surface de sortie de lumière (23) qui est orientée à l'état monté par rapport à la direction de réflexion principale (F) de manière inclinée vers l'arrière.

6. Clignotant selon l'une des revendications précédentes, **caractérisé en ce que** ledit au moins un réflecteur (3, 4, 5), qui concentre la lumière de ladite au moins une source lumineuse (14, 15, 16) dans la direction de réflexion principale (F), et l'autre réflecteur (6) forme un seul arrangement de réflecteur (7).

7. Clignotant selon l'une des revendications précédentes, **caractérisé en ce qu'**il est ainsi insérable de l'intérieur dans l'ouverture de la coque de recouvrement (11) du rétroviseur de telle sorte que la partie principale saillante de la fenêtre de lumière (9) remplit sensiblement cette ouverture, alors qu'une zone de bord (26) qui vient en retrait et qui entoure la partie principale est pressée avec l'interposition d'une garniture d'étanchéité (25) de l'intérieur contre la paroi interne de la coque de recouvrement (11) qui entoure l'ouverture.

8. Clignotant selon la revendication 7, **caractérisé en ce que** l'arrangement de réflecteur (7) comprend sur son bord périphérique (30) une projection (31) qui s'étend sensiblement sur la totalité de la périphérie, la projection (31) appuyant la garniture d'étanchéité (25) disposée entre la fenêtre de lumière (9) et la paroi interne de la coque de recouvrement (11) en outre contre la paroi interne de la coque de recouvrement (11).

9. Clignotant selon l'une des revendications précédentes, **caractérisé en ce que** le pied d'au moins une des sources de lumière (14, 15, 16, 17) est entouré par un élément de fixation (35) en forme de cadre, qui est en prise d'une part avec le porte-lampe (2) et d'autre part avec le pied de la source de lumière (14, 15, 16, 17) de telle sorte que la source de lumière (14, 15, 16, 17) présente une orientation exacte.

10. Clignotant selon l'une des revendications précédentes, **caractérisé en ce que** l'autre source de lumière comprend plusieurs lampes, qui sont disposées à l'état monté sensiblement verticalement les unes au-dessus des autres et qui comprennent chacune un propre autre réflecteur.

11. Clignotant selon la revendication 10, **caractérisé en ce que** la majeure partie de la lumière concentrée par les autres réflecteurs est déviée par un élément de renvoi de lumière commun de telle sorte qu'elle présente sensiblement une seule direction de réflexion, qui, dans le plan situé sensiblement horizontalement à l'état monté, s'étend, par rapport à la direction de réflexion principale (F), de manière inclinée vers l'arrière.
